# EUROPEAN PATENT SPECIFICATION

(11) **EP 0 696 537 B1**
(45) Date of publication and mention of the grant of the patent: **04.07.2001**
(21) Application number: 95112467.6
(22) Date of filing: 08.08.1995
(51) Int. Cl.: B62M 7/12, B62M 23/02, B62M 9/16

(54) **Electric motor operated bicycle**
Durch einen Elektromotor angetriebenes Fahrrad
Bicyclette entraînée d'un moteur électrique

(30) Priority: 08.08.1994 JP 20601594; 08.08.1994 JP 20601694
(43) Date of publication of application: 14.02.1996
(73) Proprietor: YAMAHA HATSUDOKI KABUSHIKI KAISHA, Iwata-shi Shizuoka-ken, 438 (JP)
(72) Inventor: Trigg, Robert V., c/o Yamaha Motor Europe N.V., NL-1119 NC Schiphol-Rijk (NL); Kuijpers, Jeroen N.M, c/o Yamaha Motor Europe N.V., NL-1119 NC Schiphol-Rijk (NL)
(74) Representative: Grünecker, Kinkeldey, Stockmair & Schwanhäusser Anwaltssozietät

(56) References cited:
- EP-A- 0 561 268
- WO-A-93/11992
- WO-A-94/25333
- DE-A- 4 000 960
- GB-A- 1 504 121
- US-A- 3 864 986
- US-A- 3 991 843
- US-A- 4 299 582
- US-A- 4 541 500
- US-A- 5 243 881

## Description

This invention relates to an electric motor operated bicycle according to the preamble of claim 1 or claim 15.

Such electric motor operated bicycles are known from EP-A- 561 268.

This known electric motor operated bicycle comprises for example a front wheel supported by a front fork and a rear wheel supported by a rear portion of a frame assembly. The bicycle is further provided with batteries, a motor and a controller which controls the operation of the motor. The power of the motor is transmitted from a drive shaft through belted or chained transmission means to drive the bicycle.

Such electric motor operated bicycles may include for example, one in which human power applied to the pedal and motor assist power proportional to the magnitude of the human power are applied to the rear wheel, and one in which a motor constantly drives the rear wheel without using the pedal.

In other electric motor operated bicycles, the electric power system including the motor, batteries, and a controller are attached to the bicycle frame. However, it is difficult to find a space for accommodating such an electric power system. Therefore, the system is arranged for example along the seat tube or down tube.

When the electric power system is laid out along the seat tube or the down tube, the system may come into contact with the rider's foot when rinding and getting off unless much care is taken in the design. Since the system is relatively heavy, handling for parking may require much physical effort. Therefore, designers take much effort to avoid such disadvantages.

Furthermore, in such electric motor operated bicycles, the belted power transmission means for transmitting the motor power from the drive shaft to the rear wheel has to be tensioned with a force commensurate with a specified torque to be transmitted.

If a tension commensurate with the maximum torque to be transmitted is constantly applied to the belt or chain, the durability thereof is reduced. If tension corresponding to the minimum torque to be transmitted is constantly applied, the transmission of the maximum torque involves problems.

Further, DE-OS 40 00 960 A1 shows a motor and battery arranged between the hub and the rim of a front wheel. However, a front wheel and a rear wheel of a bicycle are quite different from each other when considering the parts involved for transforming the pedal force in a forward movement. Therefore, problems relating to space economy with respect to the drive of a bicycle are significantly greater for a rear wheel than for a front wheel.

Accordingly, it is an objective of this invention to provide an electric motor operated bicycle providing high stability and an arrangement of the auxiliary drive unit improved with respect to space economy.

According to this invention, the said objective is solved by an electric motor operated bicycle, comprising a frame assembly supporting a front wheel and a rear wheel, and a power unit including a motor for driving said rear wheel and a battery for powering said motor, said power unit being disposed in the vicinity of a hub of said rear wheel, wherein said rear wheel comprises a dome-shaped disk connecting the rim of the rear wheel with its hub, and that said power unit is arranged between said rim and said hub within a space axially delimited by the length of the hub and aside said dome-shaped disk, wherein said dome-shaped disk is provided with a pulley driven by the motor of said power unit and extending around the hub while the battery of the drive unit is arranged radially inwardly of said pulley.

According to another aspect of this invention, this objective is solved by an electric motor operated bicycle, comprising a frame assembly supporting a front wheel and a rear wheel, and a power unit including a motor for driving said rear wheel and a battery for powering said motor, said power unit being disposed in the vicinity of a hub of said rear wheel, wherein a support bracket is mounted on said hub and secured on said frame assembly, said support bracket carrying the motor and a controller of said power unit within a space between the hub and a rim of said rear wheel, wherein said support bracket also carries said battery within said space, and that the battery is attached to a battery bracket which in turn is detachably attached to said support bracket.

According to another preferred embodiment of the invention, a belt tensioning device is self-adjusting in response to the output torque of the motor. In a preferred embodiment, said belt tensioning device comprises an arm pivotably supported around a pivot axis, a pair of rotary wheels rotatably supported on said arm for tensioning the belt, a first one of said wheels being in engagement with said belt upstream from the drive pulley and a second one of said wheels being in engagement with said belt downstream from the drive pulley. Said pivot axis may be disposed substantially between said pair of rotary wheels and offset towards said first rotary wheel. Accordingly, the power applied to the belt from the drive pulley causes the arm to rotate about the pivot shaft so that the second one of said wheels moves into the direction to tension the belt or chain (depending on what kind of endless transmission body is used).

In a preferred embodiment, biasing means are provided for biasing said arm to maintain a basic belt tension when the motor is stopped. Accordingly, a minimum tension is given to retain the engaged state and to prevent slippage at the instant the drive shaft starts rotation so that durability of the endless transmission member is improved.

Other preferred embodiments of the invention are laid down in further dependent claims.

Hereinafter, the present invention will be explained and illustrated in greater detail by means of preferred embodiments of the invention in connection with accompanying drawings, wherein:

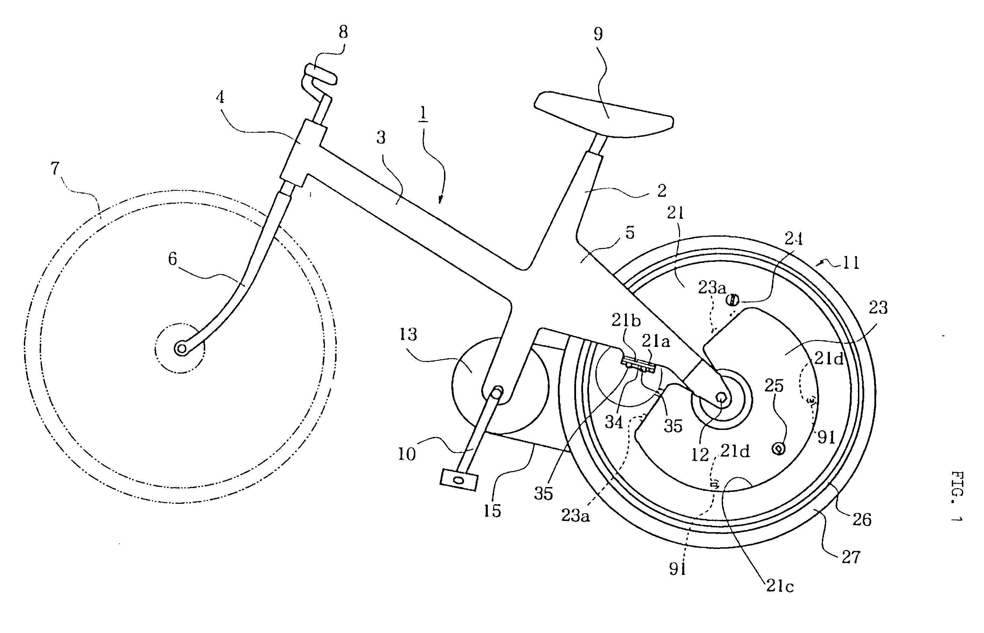

FIG. 1 is a side view of an electric motor operated bicycle according to a preferred embodiment of the present invention,

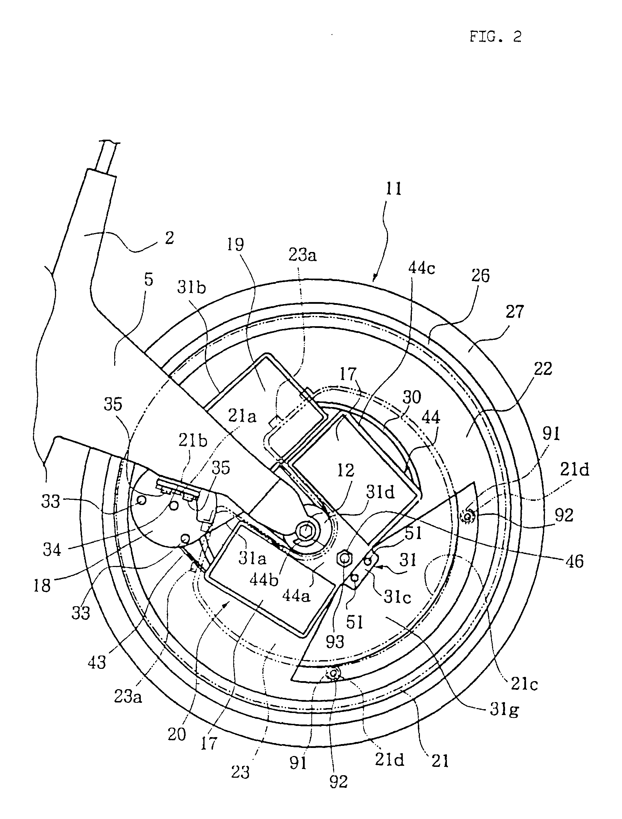

FIG. 2 is a side view of an electric motor operated bicycle to show the electric power system supported on the rear frame with a dome-shaped cover and lid removed,

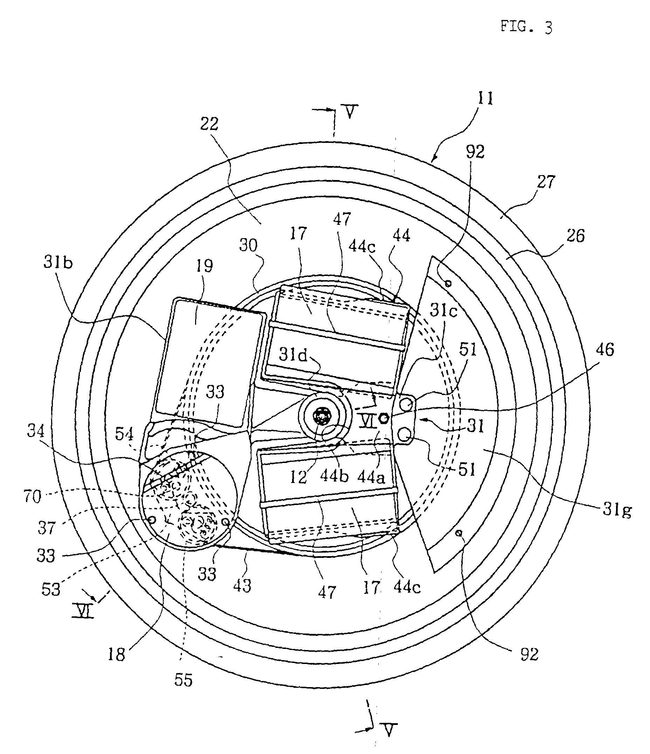

FIG. 3 is a side view in mounted state of the electric power system with the rear frame of the electric motor operated bicycle removed,

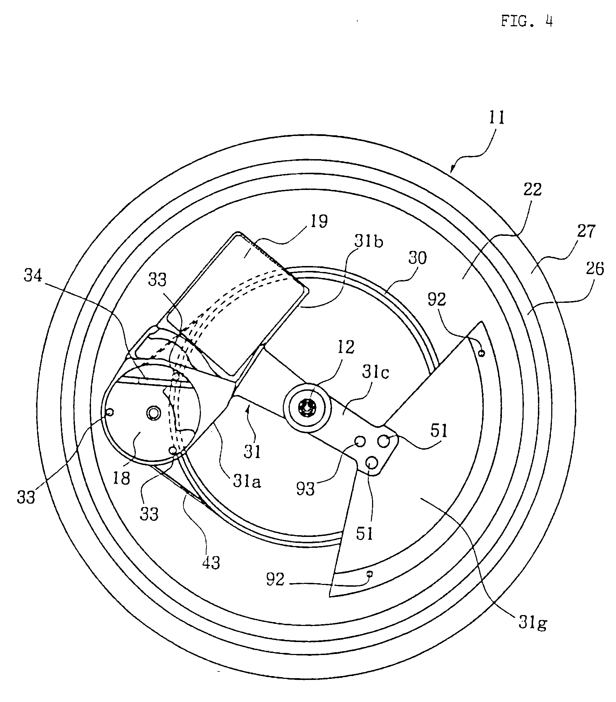

FIG. 4 is a side view same as FIG. 3 with a battery bracket removed,
FIG. 5 shows a cross section taken along the line V-V in FIG. 3,

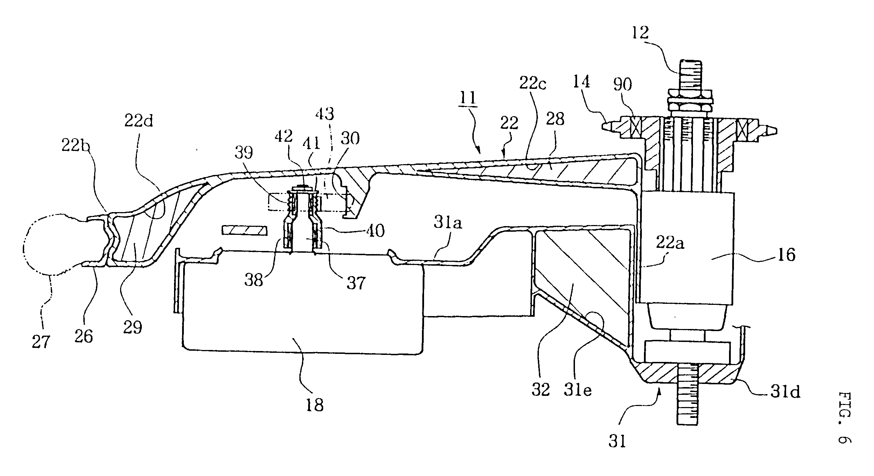

FIG. 6 shows a cross section taken along the line VI-VI in FIG. 3,
FIG. 7 is an exploded view of attachment relationship of the electric power system,

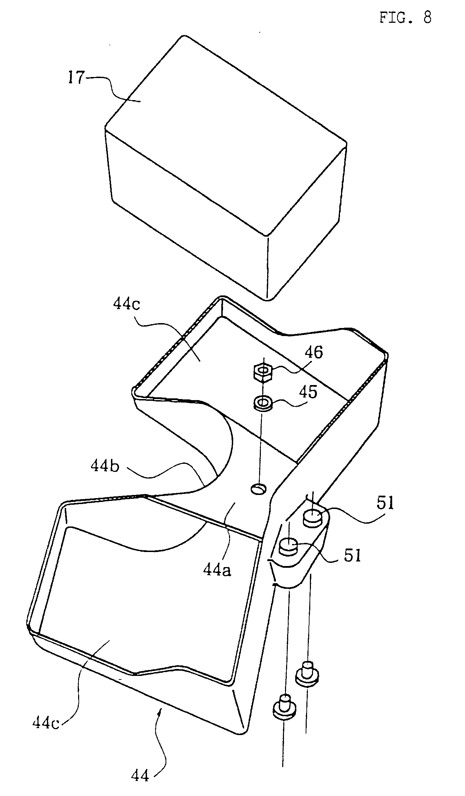

FIG. 8 is an exploded view of attachment relationship of a battery,
FIG. 9 is a side view of a tension mechanism, and

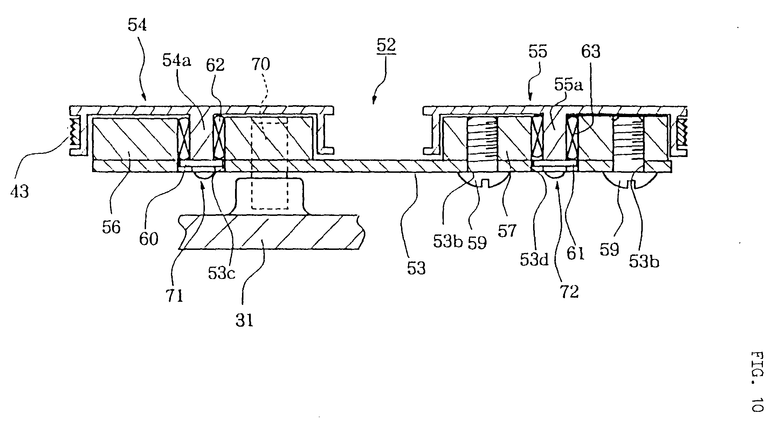

FIG. 10 shows a cross section taken along the line X-X in FIG. 9.

A frame (1) of an electric motor operated bicycle is made up of a seat tube (2), a main frame (3), a head pipe (4), and a rear frame (5). The head pipe (4) is located forward of the main frame (3). The front fork (6) is attached to the head pipe (4). At the lower part of the front fork (6) is supported a front wheel (7) while handlebars (8) are provided at the upper part.

The seat tube (2) is connected behind the main frame (3). On the top of the seat tube (2) is mounted a saddle (9). A pedal (10) is rotatably supported at the lower part of the seat tube (2). The rear frame (5) is connected to the seat tube (2). The shaft (12) of the rear wheel (11) is supported with the rear frame (5).

A sprocket (13) is provided on the pedal (10) for interlocked rotation. A chain (15) is belted between the sprocket (13) and a sprocket (14) provided on the rear wheel (11). A freewheel (90) is interposed between a wheel shaft (12) of the rear wheel (11) and the sprocket (14) so that a hub (16) is interlocked with the forward rotation of the sprocket (14) but not interlocked with reverse rotation of the sprocket (14). The rotary force in the forward direction of the rear wheel (11) is not transmitted to the sprocket (14).

This electric motor operated bicycle is provided with an electric power system including a battery-(17), a motor (18), and a controller (19). When the pedal (10) is depressed by human power, a torque is detected by a sensor (not shown) provided at the sprocket (13). According to the torque, a controller (19) controls to rotate the motor (18) so that an assist power commensurate with the human power is given to the rear wheel (11) for running the bicycle. The electric power system including a battery (17), a motor (18), and a controller (19) is located between a stationary dome-shaped cover (21) and a movable dome-shaped disk (22), with the battery (17), motor (18), and controller (19) located in the vicinity of the hub (16) of the rear wheel (11).

As described above, in the electric motor operated bicycle of this invention, the electric power system including the battery (17), the motor (18), and the controller (19) is located radially inward of the rear wheel (11). In particular, the battery (17) and the motor (18) which are relatively heavy are located near the hub (16) of the rear wheel (11). As a result, the bicycle has its center of gravity at a low position, with favorable weight balance, good running stability, and ease of handling.

A main switch (24) is arranged on the stationary dome-shaped cover (21) with its portion covering the motor (18) being formed with a slit (21a) along which is formed an attachment rib (21b). An attachment plate (34) secured to the motor (18) extends through the slit (21a) of the stationary dome-shaped cover (21) outward and secured together with the attachment rib (21b) by bolts (35) to the underside of the rear frame (5).

A window (21c) is formed in the portion, opposite the battery (17), of the stationary dome-shaped cover (21). Along the window (21c) are formed two attachment holes (21d). Attachment screws (91) are inserted through the attachment holes (21d) of the stationary dome-shaped cover (21) to be in thread engagement with screw holes (92) formed in a cover attachment portion (31g) of a support bracket (31) on which the battery (17), the motor (18), and the controller (19) are mounted.

A lid (23) is detachably attached to the window (21a) of the stationary dome-shaped cover (21) by engaging engagement pieces (23a) with the edge of the window (21c) and using a lock (25) provided toward the rear of the lid (23). The battery (17) can be changed easily through the window (21c) by releasing the lock (25) and removing the lid (23).

An inner circumferential portion (22a) of the movable dome-shaped disk (22) is secured to the hub (16) of the rear wheel (11). To an outer circumferential portion (22b) of the movable dome-shaped disk (22) is secured a rim (26) on which a tire (27) is mounted. On the inner circumferential side of the movable dome-shaped disk (22) is formed a space (22c) which is stuffed with a stuffing material (28) to increase rigidity together with the cross-sectional shape of the space. A space (22d) is also formed on the outer circumferential side of the movable dome-shaped disk (22) and filled with a stuffing material (29) to increase rigidity together with the cross-sectional shape of the space. An integral driven pulley (30) as a driven member is formed on the inner surface of the movable dome-shaped disk (22).

The plastic support bracket (31) on which the battery (17), the motor (18), and the controller (19) are mounted is integrally formed with a motor attachment portion (31a), a controller attachment portion (31b), a battery bracket attachment portion (31c), and a cover attachment portion (g). The support bracket (31) is also formed with integral cylindrical portion (31d) in which the hub (16) is positioned. Between the cylindrical portion (31d) of the support bracket (31) and the motor attachment portion (31a) and the controller attachment portion (31b) is formed a space (31e) and filled with a stuffing material (32) to increase rigidity together with the cross-sectional shape of the space.

As described above, since the support bracket (31) is formed with the cylindrical portion (31d) in which the hub (16) is positioned. This makes it possible to arrange the motor (18), the battery (17), and the controller (19) within the axial length of the hub (16) so that they are arranged compact in the direction of width.

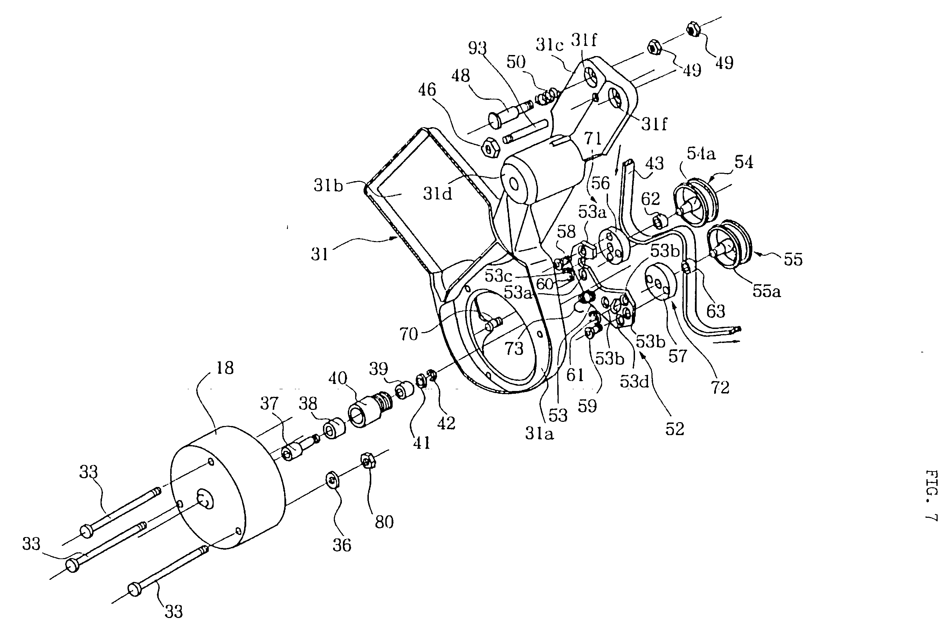

The motor (18) is fit in the motor attachment portion (31a) of the support bracket (31) and secured to the support bracket (31) using attachment bolts (33), washers (36), and nuts (80) (See FIG. 7).

Thus, the motor (18) is arranged radially inward of the rear wheel (11). A drive pulley (40) is mounted on the output shaft (37) of the motor (18) through a bearing (38) and a one way clutch (39), and is prevented from coming off by means of a washer (41) and a snap ring (42). The one way clutch (39) serves to prevent the motor (18) from being rotated by the rotation of the rear wheel (11) while the motor (18) is not rotating.

The output shaft (37) of the motor (18) extends from the motor attachment portion (31a) toward the movable dome-shaped disk (22). A belt (43) as belted power transmission means is belted between a drive pulley (40) provided on the output shaft (37) and a driven pulley (30) which is a driven member of the movable dome-shaped disk (22) for interlocked motion.

While the belt (43) is used as the belted power transmission means in this embodiment, a chain may be used together with sprockets in place of the pulleys. While the motor (18) is located in the lower part of the rear frame (5), it may be located in the upper part.

Thus, the motor (18) is located radially inward of the rear wheel (11) and the power of the motor (18) is transmitted to the driven pulley (30) of the rear wheel (11) through the belt (43) serving as belted power transmission means. Since the battery (17) is located radially inward of the driven pulley (30) to be compact radially inward of the rear wheel (11). As a result, the bicycle has its center of gravity at a low position, with favorable weight balance, good running stability, and ease of handling.

Furthermore, since the electric power system (20) is located on the inner surface of the movable dome-shaped disk (22), the arrangement is compact with respect to radial and width directions of the wheel, and the bicycle has its center of gravity at a low position, with favorable weight balance, good running stability, and ease of handling.

The controller (19) is fit and secured in the controller attachment portion (31b) of the support bracket (31). While the controller (19) is located in the upper part of the rear frame (5), it may be located in the lower part if the motor (18) is located in the upper part of the rear frame (5).

A space for accommodating the battery (17) is formed within the stationary dome-shaped cover (21) and the movable dome-shaped cover (22) so that a relatively large sized battery (17) can be easily accommodated within the dome-shaped disks.

A stud bolt (93) is studded in the battery bracket attachment portion (31c) of the support bracket (31). A battery bracket (44) is detachably attached to the support bracket (31) so that the stud bolt (93) passes through an attachment portion (44a) of the battery bracket (44) and a washer (45) and a nut (46) are fit and tightened on the stud bolt (93).

The battery bracket (44) is attached by engagement between a recess (44b) formed in the attachment portion (44a) and the cylindrical portion (31d) of the support bracket (31). Battery attachment portions (44c) are formed on both sides of the attachment portion (44a). Batteries (17) are fit in the battery attachment portions (44c) and held by straps (47). The batteries (17) are located to cross the plane of rotation of the rear wheel (11) to be located within the axial dimension of the rear wheel (11) so as to be compact in the wheel width direction.

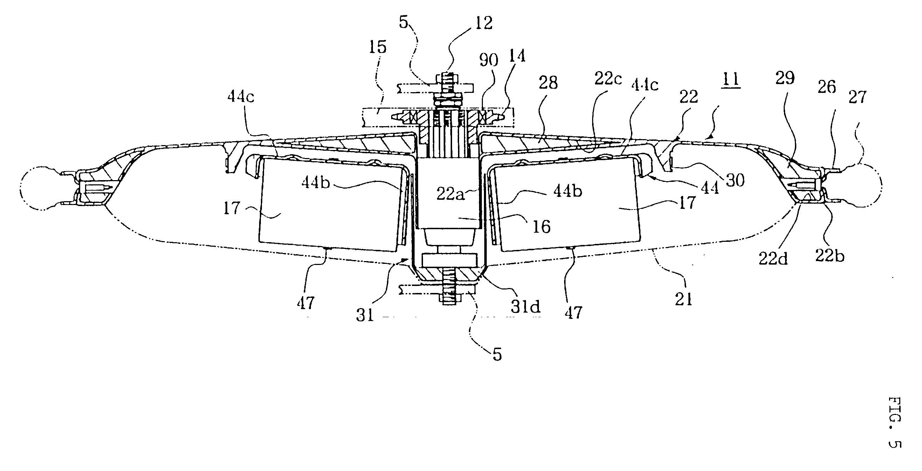

The batteries (17) are located above and below the wheel shaft (12) of the rear wheel (11). As shown in FIG. 5, the batteries (17) are arranged with inclination toward the wheel shaft to utilize the width of the rear wheel (11) so as to minimize protrusion of the stationary dome-shaped cover (21) in the wheel width direction and to make the wheel compact with respect to its width direction.

The arrangement described before makes it possible to form the space (22c) on the inner circumferential side of the movable dome-shaped disk (22). The shape of the cross section of the space (22c) and the stuffing material (28) filling the space (22c) increase the rigidity at the root of the dome-shaped disk (22).

Terminals (48) (only one of two is shown) are held at terminal holes (31f) in a battery bracket attachment portion (31c) of the support bracket (31) by means of double nuts (49) and urged by springs (50). The terminals (48) are connected to the controller (19) through leads (not shown). At positions on the support bracket (31) corresponding to the terminals (48), terminals (51) are located which are provided on the attachment portion (44a) of the battery bracket (44) so that the terminals (48) and (51) are electrically connected to each other when the battery bracket (44) is attached.

The electric motor operated bicycle is further provided with a tension mechanism (52) for the belt (43) serving as belted power transmission means. The tension mechanism (52) has an arm (53) having bearing blocks (56) and (57) respectively supporting rotary wheels (54) and (55) through bearings (62) and (63) for rotation. The bearing blocks (56) and (57) are secured to the arm (53) by screws (58) and (59) inserted through attachment holes (53a) and (53b) bored in the arm (53). The arm (53) is provided with the attachment holes (53a) symmetrically on both sides of a recess (53c) for attaching the bearing block (56). The attachment holes (53b) for attaching the bearing block (57) are provided four in number, one on one side of an elongate hole (53d) and three on the other side.

The shaft portion (54a) of the rotary wheel (5) is prevented from coming off the bearing block (56) by a snap ring (60), and the shaft portion (55a) of the rotary wheel (55) is prevented from coming off the bearing block (57) by a snap ring (61).

The bearing block (57) is secured by the screw (59) inserted through the central one of three attachment holes (53b) in the arm (53). While the shaft portion (55a) of the rotary wheel (55) is located in the center of the elongate hole (53d) of the arm (53), tension of the belt (43) can be adjusted by selecting another of the three attachment holes (53b) of the arm (53).

The bearing block (56) of the rotary wheel (54) is rotatably supported by a pivot shaft (70) provided on the support bracket (31). The arm (53) can swing about the pivot shaft (70). The pivot shaft (70) is located between bearing portions (71) and (72) of the rotary wheels (54) and (55) and offset toward the bearing portion (71). The output shaft (37), as a drive shaft, of the motor (18) is located between the rotary wheels (54) and (55) and belted by the belt (43). The rotating direction of the output shaft (37) of the motor (18) is such that the tension side of the belt (43) is on the side of the pivot shaft (70). The arm (53) is constantly urged by a resilient force of a spring (73) toward outside. This resilient force is set to a minimum value to maintain the belted state of the belt (43) when the motor (18) stops, and to prevent the belt (43) from slipping when the output shaft (37) of the motor (18) starts rotation.

Generally, for transmitting a specified torque, a belt serving as a belted power transmission means has to be tensioned with a force commensurate with the torque. Conventionally, tensioners have been constituted to constantly provide the tension commensurate with the maximum torque to be transmitted which is not desirable for the durability of the belt power transmission means.

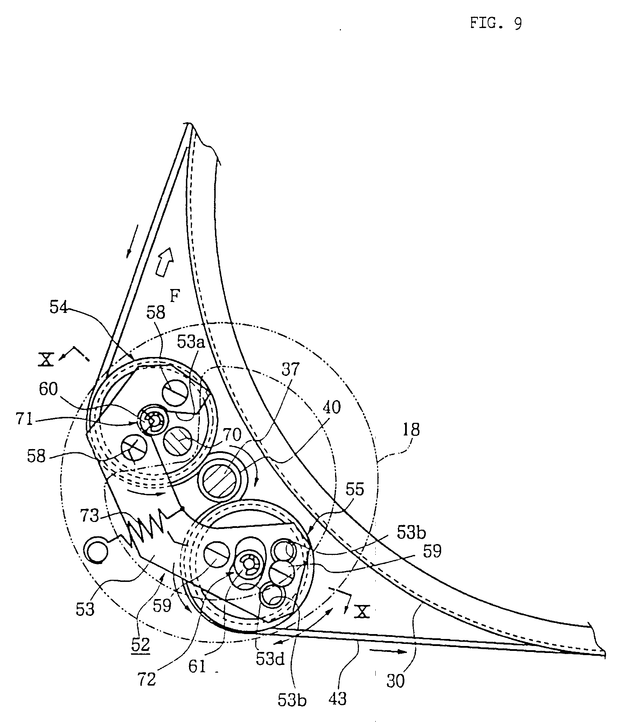

As shown in FIG. 9, when the output shaft (37) of the motor (18) starts rotation in the direction of the arrow, as the belt (43) of the belted power transmission means is tensioned by a reactional force, the rotary wheel (54) on the pivot shaft (70) side moves inward (upward in FIG. 9). As a result, the arm (53) rotates about the pivot shaft (70) in the rotating direction of the output shaft (37) of the motor (18). Therefore, the rotary wheel (55) opposite beyond the output shaft (37) of the motor (18) moves outward (downward in FIG. 9), a specified tension is given to the belt (43), and torque transmission efficiency is improved.

Since the amount of swing of the arm (53) about the pivot shaft (70) changes according to the amount of torque of the motor (18), tension of the belt (43) and belting angle of the belt (43) around the driven pulley (40) are automatically regulated so that an appropriate tension commensurate with a torque is always provided. When the motor (18) is at rest, since only a minimum of tension is provided so that the arm (53) is always urged outward by the spring (73) to maintain the belted state, and to prevent the belt (43) from slipping at the moment the output shaft (37) of the motor (18) starts rotation, the durability of the belt (43) is improved.

As described above , the batteries and the motor are located near the rear wheel hub with low center of gravity, good balance, good running stability and easy handling of the bicycle.

According to an embodiment, the motor is located radially generally inward of the rear wheel, power of the motor is transmitted through belted power transmission means to a driven member of the rear wheel, and the batteries are located radially generally inward of the driven member, located radially generally inward of the rear wheel, with low center of gravity, good weight balance, good running stability and easy handling of the bicycle.

Moreover, the electric power system is located on the inner surface of the dome-shaped disk secured to the hub so as to be compact in the radial and width directions of the rear wheel, with low center of gravity, good weight balance, good running stability and easy handling of the bicycle.

Furthermore , batteries are located to cross the plane of rear wheel rotation, so as to be compact in the radial and width directions of the rear wheel, with low center of gravity, good weight balance, good running stability and easy handling of the bicycle.

Moreover , since the space for accommodating the batteries is formed within the stationary dome-shaped disk, a relatively large space for accommodating batteries is secured easily by utilizing the stationary dome-shaped disk.

According to the above embodiment, the support bracket on which the motor, batteries, and controllers are supported is securely held with the rear frame.

Additionally, the cylindrical portion is formed on the support bracket, the hub is located within the cylindrical portion, and it is possible to arrange the motor, batteries, and controller compactly in the width direction utilizing the width of the hub in its axial direction.

A further advantage is that the motor subjected to loads is securely supported with the rear frame.

Moreover, the batteries are located compactly in the width direction, with low center of gravity and good weight balance by arranging the batteries above and below the rear wheel shaft so that they are balanced.

Furthermore, the batteries are located compactly in the width direction by tilting the batteries in the rear wheel shaft direction and utilizing the rear wheel width.

As described above , the batteries are attached to the battery bracket, and the battery bracket in turn is detachably attached to the support bracket. As a result, the batteries are securely positioned, and at the same time, it is easy to replace the batteries.

According to the above-described embodiment, the endless transmission member is tensioned by a reactional force of the rotation of the drive shaft caused by the drive of the motor, the rotary wheel on the pivot shaft side moves inwards, the arm rotates about the pivot shaft in the direction of rotation of the drive shaft of the motor and the rotary wheel located beyond the drive shaft moves outward. As a result, a specified tension is given to the belted power transmission means to improve torque transmission efficiency.

Since the amount of swing of the arm about a pivot shaft changes according to the amount of torque of the motor, tension of the belt and belting angle of the belt around the driven pulley are automatically regulated so that an appropriate tension commensurate with the torque is always provided.

When the motor is stopped, since only a minimum of tension is provided so that the arm is always urged outward by the spring to maintain the engagement state, and to prevent the belt from slipping at the moment the output shaft of the motor starts to rotate, the durability of the endless transmission member is improved.

Although the above-described preferred embodiment of the invention employs a belt, any kind of endless transmission members such as belts, chains or the like may be employed as a matter of course.

Last not least , the controller is located in the upper or lower part of the rear frame so that the controller is securely supported with the rear frame.

## Claims

1. An electric motor operated bicycle, comprising a frame assembly (1) supporting a front wheel (7) and a rear wheel (11), and a power unit (17,18,19) including a motor (18) for driving said rear wheel (11) and a battery (17) for powering said motor, said power unit (17,18,19) being disposed in the vicinity of a hub (16) of said rear wheel (11),
**characterized in that**
said rear wheel (11) comprises a dome-shaped disk (22) connecting the rim (26) of the rear wheel (11) with its hub (16),
and that said power unit (17,18,19) is arranged between said rim (26) and said hub (16) within a space axially delimited by the length of the hub (16) and aside said dome-shaped disk (22), wherein said dome-shaped disk (22) is provided with a pulley (30) driven by the motor (18) of said power unit and extending around the hub (16) while the battery (17) of the drive unit is arranged radially inwardly of said pulley (30).

2. Bicycle according to claim 1, **characterized in that** said disk (22) being provided with said pulley (30) is driven from said motor (16) via a single belt drive (43) or chain drive.

3. Bicycle according to claim 2, **characterized in that** said motor (18) comprises an output shaft (37) with a drive pulley (40) mounted thereon, said drive pulley being connected with said pulley (30) of the dome-shaped disk (22) via a belt (43) or chain.

4. Bicycle according to claim 2 or 3, **characterized in that** a belt tensioning device (52) is provided for tensioning the belt (43) or chain, said belt tensioning device (52) being adjustable corresponding to an output torque of said motor (18).

5. Bicycle according to at least one of claims 1 to 4, **characterized in that** said power unit is provided with a controller (19) for controlling the motor (18) in response to human power applied to a pedal drive mechanism (10,13,14,15).

6. Bicycle according to at least one of claims 1 to 5, **characterized in that** a stationary dome-shaped cover (21) is provided opposite said dome-shaped disk (22) with the power unit (17,18,19) being located between said cover and said disk.

7. Bicycle according to at least one of claims 1 to 6, **characterized in that** a plurality of batteries (17) are provided on opposite sides of the hub (16) of said wheel (11).

8. Bicycle according to claim 7, **characterized in that** said batteries (17) are tilted with respect to a direction defined by the hub (16) of the rear wheel (11).

9. Bicycle according to claim 7 or 8, **characterized in that** said batteries (17) are located above and below a rear wheel shaft.

10. Bicycle according to at least one of claims 1 to 9, **characterized in that** a common support bracket (31) secured to said frame assembly (1) is provided for supporting the motor (18), the controller (19) and the battery (17).

11. Bicycle according to at least one of claims 4 to 10, **characterized in that** said belt tensioning device (52) is self-adjusting in response to the output torque of said motor (18).

12. Bicycle according to at least one of claims 4 to 11, **characterized in that** said belt tensioning device (52) comprising an arm (53) pivotably supported around a pivot axis (70), a pair of rotary wheels (54,55) rotatably supported on said arm for tensioning the belt (43), a first one of said wheels (54) being in engagement with said belt (43) upstream from the drive pulley (40) and a second one of said wheels (55) being in engagement with said belt (43) downstream from the drive pulley (40).

13. Bicycle according to claim 12, **characterized in that** said pivot axis (70) is disposed substantially between said pair of rotary wheels (54,55) and offset towards said first rotary wheel (54).

14. Bicycle according to at least one of claims 11 to 13, **characterized in that** biasing means (73) are provided for biasing said arm (53) to maintain a basic belt tension when the motor (18) is stopped.

15. An electric motor operated bicycle, comprising a frame assembly (1) supporting a front wheel (7) and a rear wheel (11), and a power unit (17,18,19) including a motor (18) for driving said rear wheel (11) and a battery (17) for powering said motor, said power unit (17,18,19) being disposed in the vicinity of a hub (16) of said rear wheel (11), wherein a support bracket (31) is mounted on said hub (16) and secured on said frame assembly (1), said support bracket (31) carrying the motor (18) and a controller (19) of said power unit within a space between the hub (16) and a rim (26) of said rear wheel (11),
**characterized in that**
said support bracket (31) also carries said battery (17) within said space, and that the battery (17) is attached to a battery bracket (44) which in turn is detachably attached to said support bracket (31).

16. Bicycle according to at least one of claims 10 to 15, **characterized in that** said support bracket (31) is provided with a cylindrical portion (31d) within which said hub (16) is positioned.

## Patentansprüche

1. Elektromotorisch betätigtes Fahrrad, mit einer Rahmenanordnung (1), die ein Vorderrad (7) und ein Hinterrad (11) lagert, und einer Antriebseinheit (17,18,19), die einen Motor (18) zum Antrieb des Hinterrades (11) und eine Batterie (17) zum Antrieb des Motors enthält, wobei die Antriebseinheit (17,18,19) in der Nähe einer Nabe (16) des Hinterrades (11) angeordnet ist,
**dadurch gekennzeichnet,** daß
das Hinterrad (11) ein domförmige Scheibe (22) aufweist, die den Rand (26) des Hinterrades (11) mit seiner Nabe (16) verbindet,
und daß die Antriebseinheit (17,18,19) zwischen dem Rand (26) und der Nabe (16) innerhalb eines Raumes angeordnet ist, der axial durch die Länge der Nabe (16) und seitlich durch die domförmige Scheibe (22) begrenzt ist, wobei die domförmige Scheibe (22) mit einer Riemenscheibe (30), angetrieben durch den Motor (18) der Antriebseinheit, die sich rund um die Nabe (16) erstreckt, versehen ist, während die Batterie (17) der Antriebseinheit radial axial einwärts der Riemenscheibe (30) angeordnet ist.

2. Fahrrad nach Anspruch 1, **dadurch gekennzeichnet,** daß die Scheibe (22), die mit der Riemenscheibe (30) versehen ist, von dem Motor (16) über einen einzigen Riemenantrieb (43) oder Kettenantrieb angetrieben ist.

3. Fahrrad nach Anspruch 2, **dadurch gekennzeichnet,** daß der Motor (18) eine Abtriebswelle (37) mit einer Antriebsriemenscheibe (40), die auf dieser befestigt ist, versehen ist, wobei die Antriebsriemenscheibe mit der Riemenscheibe (30) der domförmigen Scheibe (22) über einen Riemen (43) oder eine Kette verbunden ist.

4. Fahrrad nach Anspruch 2 oder 3, **dadurch gekennzeichnet,** daß eine Riemen-Spannvorrichtung (52) vorgesehen ist, zum Spannen des Riemens (43) oder der Kette, wobei die Riemen-Spannvorrichtung (52) entsprechend einem Ausgangsdrehmoment des Motors (18) einstellbar ist. drehmoment des Motors (18) einstellbar ist.

5. Fahrrad nach zumindest einem der Ansprüche 1 bis 4, **dadurch gekennzeichnet,** daß die Antriebseinheit mit einer Steuereinrichtung (19) zur Steuerung des Motors (18) in Abhängigkeit von der menschlichen Antriebskraft, die einer Pedal-Antriebsvorrichtung (10,13,14,15) zugeführt wird, vorgesehen ist.

6. Fahrrad nach zumindest einem der Ansprüche 1 bis 5, dadurch gekennzeichnet, daß eine stationäre, domförmige Abdeckung (21) gegenüberliegend zu der domförmigen Scheibe (22) angeordnet ist, wobei die Antriebseinheit (17,18,19) zwischen der Abdeckung und der Scheibe angeordnet ist.

7. Fahrrad nach zumindest einem der Ansprüche 1 bis 6, **dadurch gekennzeichnet,** daß eine Mehrzahl von Batterien (17) an gegenüberliegenden Seiten der Nabe (16) des Rades (11) vorgesehen sind.

8. Fahrrad nach Anspruch 7, **dadurch gekennzeichnet,** daß die Batterien (17) in Bezug auf eine Richtung, die durch die Nabe (16) des Hinterrades (11) bestimmt ist, geneigt sind.

9. Fahrrad nach Anspruch 7 oder 8, **dadurch gekennzeichnet,** daß die Batterien (17) oberhalb oder unterhalb einer Hinterradwelle angeordnet sind.

10. Fahrrad nach zumindest einem der Ansprüche 1 bis 9, **dadurch gekennzeichnet,** daß eine gemeinsame Lagerungshalterung (31) befestigt an der Rahmenanordnung (1) vorgesehen ist, um den Motor (18), die Steuereinrichtung (19) und die Batterie (17) zu lagern.

11. Fahrrad nach zumindest einem der Ansprüche 4 bis 10, **dadurch gekennzeichnet,** daß die Riemen-Spannvorrichtung (52) in Abhängigkeit von dem Ausgangsdrehmoment des Motors (18) selbsteinstellend ist.

12. Fahrrad nach zumindest einem der Ansprüche 4 bis 11, **dadurch gekennzeichnet,** daß die Riemen-Spannvorrichtung (52) einen Arm (53) aufweist, der um eine Drehachse (70) drehbar gelagert ist, sowie ein Paar Drehräder (54,55) aufweist, die drehbar an dem Arm zur Spannung des Riemens (43) gelagert sind, wobei das erste der Räder (54) in Eingriff mit dem Riemen (43) stromauf der Antriebsriemenscheibe (40) ist, und ein zweites der Räder (55) in Eingriff mit dem Riemen (43) stromab der Antriebsriemenscheibe (40) ist.

13. Fahrrad nach Anspruch 12, **dadurch gekennzeichnet,** daß die Drehachse (70) im wesentlichen zwischen dem Paar Drehräder (54,55) und in Richtung des ersten Drehrades (54) versetzt angeordnet ist.

14. Fahrrad nach zumindest einem der Ansprüche 11 bis 13, **dadurch gekennzeichnet,** daß Vorspannmittel (73) vorgesehen sind, um den Arm (53) vorzuspannen, um eine Grund-Riemenspannung beizubehalten, wenn der Motor (18) angehalten ist.

15. Elektromotorisch betätigtes Fahrrad mit einer Rahmenanordnung (1), die ein Vorderrad (7) und ein Hinterrad (11) sowie eine Antriebseinheit (17,18,19) lagert, die einen Motor (18) zum Antreiben des Hinterrades (11) und eine Batterie (17) zum Antrieb des Motors lagert, wobei die Antriebseinheit (17,18,19) in der Nähe einer Nabe (16) des Hinterrades (11) angeordnet ist, wobei eine Lagerungshalterung (31) an der Nabe (16) montiert und an der Rahmenanordnung (1) gefestigt ist, wobei die Lagerungshalterung (31) den Motor (18) und eine Steuereinrichtung (19) der Antriebseinheit innerhalb des Raumes zwischen der Nabe (16) und einem Rand (26) des Hinterrades (11) lagert,
**dadurch gekennzeichnet,** daß
die Lagerungshalterung (31) auch die Batterie (17) innerhalb des Raumes lagert und daß die Batterie (17) mit eine Batteriehalterung (44) verbunden ist, die ihrerseits lösbar mit der Lagerungshalterung (31) verbunden ist.

16. Fahrrad nach zumindest einem der Ansprüche 10 bis 15, **dadurch gekennzeichnet,** daß die Lagerungshalterung (31) mit einem zylindrischen Abschnitt (31d) versehen ist, innerhalb dessen die Nabe (16) angeordnet ist.

## Revendications

1. Bicyclette entraînée par un moteur électrique, comprenant un ensemble de cadre (1) supportant une roue avant (7) et, une roue arrière (11), et un ensemble propulseur (17, 18, 19) comprenant un moteur (18) destiné à entraîner ladite roue arrière (11) et une batterie (17) destinée à alimenter ledit moteur, ledit ensemble propulseur (17, 18, 19) étant disposé à proximité d'un moyeu (16) de ladite roue arrière (11), caractérisée en ce que
ladite roue arrière (11) comprend un disque en forme de dôme (22) reliant la jantes (26) de la roue arrière (11) à son moyeu (16),
et en ce que ledit ensemble propulseur (17, 18, 19) est aménagé entre ladite jante (26) et ledit moyeu (16) à l'intérieur d'un espace délimité axialement par la longueur du moyeu (16) et à côté dudit disque en forme de dôme (22), dans lequel ledit disque en forme de dôme (22) comporte une poulie (30) entraînée par le moteur (18) dudit ensemble propulseur et s'étendant autour du moyeu (16), alors que la batterie (17) de l'ensemble d'entraînement est aménagée de manière radiale vers l'intérieur de ladite poulie (30).

2. Bicyclette selon la revendication 1, caractérisée en ce que ledit disque (22) qui comporte ladite poulie (30) est entraîné par ledit moteur (18) par l'intermédiaire d'un entraînement à courroie unique (43) ou par un entraînement à chaîne.

3. Bicyclette selon la revendication 2, caractérisée en ce que ledit moteur (18) comprend un arbre de sortie (37), une poulie d'entraînement (40) étant montée sur celui-ci, ladite poulie d'entraînement (40) étant reliée à ladite poulie (30) du disque en forme de dôme (22) par l'intermédiaire d'une courroie (43) ou d'une chaîne.

4. Bicyclette selon la revendication 2 ou la revendication 3, caractérisée en ce qu'un dispositif tendeur de courroie (52) est fourni pour tendre la courroie (43) ou la chaîne, ledit dispositif tendeur de courroie (52) étant réglable en fonction d'un couple de sortie dudit moteur (18).

5. Bicyclette selon au moins l'une des revendications 1 à 4, caractérisée en ce que ledit ensemble propulseur comporte une unité de commande (19) destinée à commander le moteur (18) en réponse à une puissance humaine appliquée à un mécanisme d'entraînement à pédales (10, 13, 14, 15).

6. Bicyclette selon au moins l'une des revendications 1 à 5, caractérisée en ce qu'un capot statique en forme de dôme (21) est disposé en opposition au dit disque en forme de dôme (22), l'ensemble propulseur (17, 18, 19) étant placé entre ledit capot et ledit disque.

7. Bicyclette selon au moins l'une des revendications 1 à 6, caractérisée en ce qu'une pluralité de batteries (17) est disposée sur les côtés opposés du moyeu (16) de ladite roue arrière (11).

8. Bicyclette selon la revendication 7, caractérisée en ce que lesdites batteries (17) sont inclinées par rapport à une direction définie par le moyeu (16) de la roue arrière (11).

9. Bicyclette selon la revendication 7 ou la revendication 8, caractérisée en ce que lesdites batteries (17) sont situées au-dessus et au-dessous d'un axe de roue arrière.

10. Bicyclette selon au moins l'une des revendications 1 à 9, caractérisée en ce qu'un support commun (31) fixé sur ledit ensemble de cadre (1) est fourni pour supporter le moteur (18), l'unité de commande (19) et la batterie (17).

11. Bicyclette selon au moins l'une des revendications 4 à 10, caractérisée en ce que ledit dispositif tendeur de courroie (52) est à réglage automatique en réponse au couple de sortie dudit moteur (18)

12. Bicyclette selon au moins l'une des revendications 4 à 11, caractérisée en ce que ledit dispositif tendeur de courroie (52) comprend un bras (53) supporté en pivotement autour d'un axe de pivotement (70), une paire de roulettes rotatives (54, 55) supportées de manière à pouvoir tourner sur ledit bras afin de tendre la courroie (43), une première desdites roulettes (54) étant en engagement avec ladite courroie (43) en amont de la poulie d'entraînement (40) et la seconde desdites roulettes (55) étant en engagement avec ladite courroie (43) en aval de la poulie d'entraînement (40).

13. Bicyclette selon la revendication 12, caractérisée en ce que ledit axe de pivotement (70) est disposé essentiellement entre ladite paire de roulettes rotatives (54, 55) et décalé vers ladite première roulette rotative (54).

14. Bicyclette selon au moins l'une des revendications 11 à 13, caractérisée en ce que des moyens de décentrement (73) sont fournis pour décentrer ledit bras (53) afin de conserver une tension de base à la courroie lorsque le moteur (18) est arrêté.

15. Bicyclette entraînée par un moteur électrique, comprenant un ensemble de cadre (1) supportant une roue avant (7) et une roue arrière (11), et un ensemble propulseur (17, 18, 19) comprenant un moteur (18) destiné à entraîner ladite roue arrière (11) et une batterie (17) destinée à alimenter ledit moteur, ledit ensemble propulseur (17, 18, 19) étant disposé à proximité d'un moyeu (16) de ladite roue arrière (11), dans laquelle un support (31) est monté sur ledit moyeu (16) et fixé sur ledit ensemble de cadre (1), ledit support (31) supportant le moteur (18) et une unité de commande (19) dudit ensemble propulseur à l'intérieur d'un espace situé entre le moyeu (16) et une jante (26) de ladite roue arrière (11),
caractérisée en ce que
ledit support (31) supporte également ladite batterie (17) à l'intérieur dudit espace, et en ce que la batterie (17) est fixée sur un support de batterie (44) qui à son tour est fixé de manière amovible sur ledit support (31).

16. Bicyclette selon au moins l'une des revendications 10 à 15, caractérisée en ce que ledit support (31) comporte une partie cylindrique (31d) à l'intérieur de laquelle ledit moyeu (16) est positionné.
